# EUROPÄISCHE PATENTSCHRIFT

(11) **EP 0 489 092 B1**
(45) Veröffentlichungstag und Bekanntmachung des Hinweises auf die Patenterteilung: **11.08.1993**
(21) Anmeldenummer: 90913140.1
(22) Anmeldetag: 24.08.1990
(51) Int. Cl.: B24B 53/14

(54) **ABRICHTEN VON SCHLEIFSCHEIBEN**
TRIMMING UP ABRADING DISCS
DRESSAGE DES MEULES

(30) Priorität: 25.08.1989 AT 2009/89
(43) Veröffentlichungstag der Anmeldung: 10.06.1992
(73) Patentinhaber: Tyrolit Schleifmittelwerke Swarovski KG, 6130 Schwaz (AT)
(72) Erfinder: PRIELER, Alois, A-8740 Zeltweg (AT); KöCHL, Johann, A-6130 Schwaz (AT)
(74) Vertreter: Torggler, Paul, Dr.
(86) Internationale Anmeldenummer: AT9000082
(87) Internationale Veröffentlichungsnummer: WO9102626

(56) Entgegenhaltungen:
- EP-A- 163 843
- EP-A- 303 770
- EP-A- 0 327 719
- DE-A- 2 740 891
- DE-A- 3 434 714
- FR-A- 1 070 546
- US-A- 4 854 295

## Beschreibung

Die Erfindung bezieht sich auf ein Verfahren zum Abrichten von Schleifscheiben, wobei ein sich um eine zur Drehachse der Schleifscheibe parallele Achse drehender Abrichtkörper mit radialem und axialem Vorschub bewegt wird.

Es ist bekannt, daß Schleifscheiben vor dem ersten Einsatz und nach längerer Einsatzdauer abgerichtet werden müssen, damit ihre Funktion gewährleistet ist bzw. erhalten bleibt. Dabei müssen geometrische Fehler, z. B. Unrundheit oder Kantenverrundungen, behoben werden, und im Mikrobereich müssen abgestumpfte Schneiden aufgerauht werden. Nach längerem Einsatz der Schleifscheibe müssen mit Spänen gefüllte Porenräume wieder freigemacht werden, damit während des Schleifens eine Spanbildung nicht behindert wird.

Das einfachste Abrichtwerkzeug ist der Einzeldiamant. Der Nachteil dieses Abrichtwerkzeuges ist im schnellen Verschleiß des Einzeldiamanten zu sehen, was zu unterschiedlichem Schleifverhalten bzw. zu einer unterschiedlichen Wirkrauhtiefe bei dem behandelten Werkzeug (Schleifscheibe) führt, daraus resultierend zu einem unterschiedlichen Schliff.

Immer mehr Bedeutung gewinnt das Abrichten mittels einer Abrichtrolle. Diese Abrichtrollen sind im allgemeinen mit Diamantkorn bestückt, wobei das Diamantkorn auf die Rolle entweder aufgesintert oder galvanisch aufgetragen ist. Die Abrichtrolle weist in beiden Fällen einen metallischen Trägerkörper auf, der im Abrichtbereich mit einer einfachen Schichte von Diamantkorn versehen ist.

Man unterscheidet prinzipiell zwischen Abrichtprofilrollen und Abrichtformrollen. Bei Abrichtprofilrollen weist die Abrichtrolle ein Profil auf, das einem Negativprofil der abzurichtenden Schleifscheibe entspricht.

Abrichtformrollen hingegen haben ein universelles, nicht werkstückgebundenes Profil, das im Scheibenrandbereich im Querschnitt in etwa V-förmig ist, wobei der Scheibenscheitel beim Abrichtvorgang zum Einsatz kommt. Während des Abrichtens führt die Abrichtformrolle sowohl eine radiale als auch eine axiale Bewegung durch. Die Bahngeometrie kann von CNC-Steuerungen oder an vorgeschalteten Programmierplätzen errechnet werden. Durch den Quervorschub wird die Abrichtformrolle zum Unterschied von der Abrichtprofilrolle seitlich beansprucht. Um diese seitliche Beanspruchung besser aufnehmen zu können, sind Abrichtformrollen gemäß dem Stand der Technik im allgemeinen mit einem relativ breiten Trägerkörper versehen, der umfangseitig, wie bereits erwähnt, seitlich abgeschrägt ist. Durch dieses Profil ergibt sich, daß die eigentliche Schneidfläche am äußeren Umfang der Abrichtformrolle während des Einsatzes ständig breiter wird. Andererseits ist für den Abrichtvorgang an sich eine sehr schmale Abrichtfläche von Vorteil. Da nur mit einer solchen kleine Radien in der Profilbahn ausgefahren werden können, ist die Standzeit einer derartigen Abrichtformrolle relativ gering. Eine Lösung ist in EP 0 116 668 beschrieben. Nachteilig ist, daß nur eine Lage engklassierter, teurer Diamanten verwendet wird, was eine geringere Standzeit und höhere Kosten ergibt. In der EP-A1 327 719 ist eine Abrichtscheibe mit einem metallischen Trägerkörper und umfangseitigen Segmenten, die mit Schleifkorn versehen sind, beschrieben, wobei jedes Segment eine mittlere Schleifschichte und zwei seitliche Stützschichten aufweist. Der Nachteil eines derartigen Abrichtwerkzeuges ist darin zu sehen, daß nur gerade abgerichtete und auf die zu abrichtende Schleifscheibe kein Profil aufgebracht werden kann.

Aufgabe der Erfindung ist es, ein Verfahren zum Abrichten von Schleifscheiben zu schaffen, das sich durch hohe Sicherheit und güngstige Kosten (Werkzeug- und Abrichtgesamtkosten) auszeichnet.

Die erfindungsgemäße Aufgabe wird durch die Verwendung einer Säge, mit einem kreisförmigen metallischen Sägeblatt an dessen Umfang mit Schleifkorn vorzugsweise Diamantkorn besetzte Schneidsegmente angeordnet sind zum Abrichten von Schleifscheiben, gelöst.

Das erfindungsgemäße Verfahren sieht vor, daß als Abrichtkörper eine Säge mit einem kreisförmigen metallischen Sägeblatt, an dessen Umfang mit Schleifkorn, vorzugsweise Diamantkorn besetzte Schneidsegmente angeordnet sind, eingesetzt wird.

Nachfolgend wird ein Abrichtwerkzeug anhand der beiliegenden Zeichnungen beschrieben, das sich zur Verwendung bei dem erfindungsgemäßen Verfahren eignet.

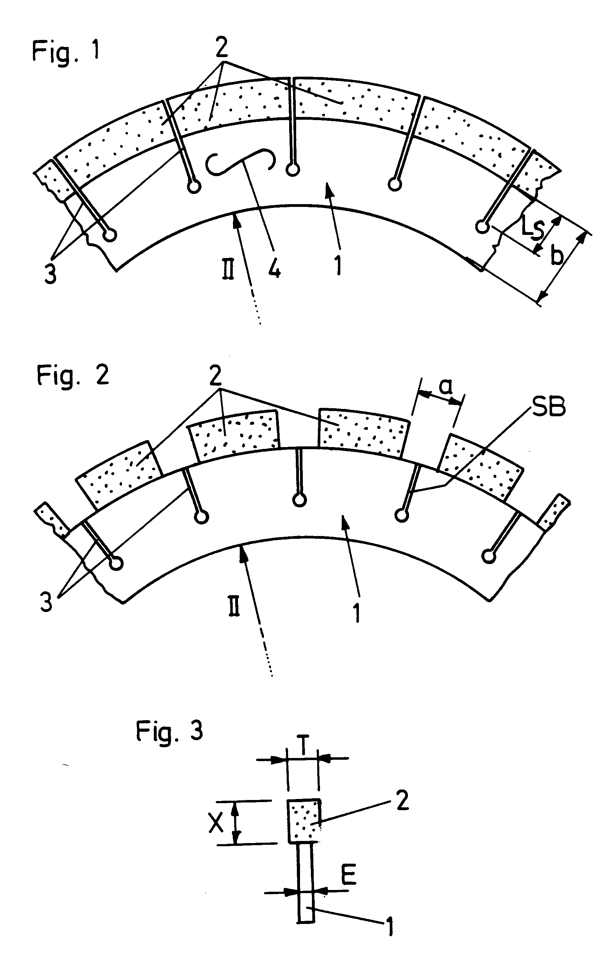

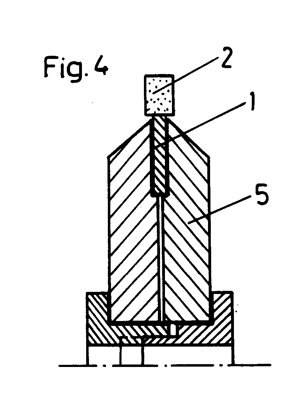

Die Figuren 1 und 2 zeigen ausschnittsweise eine Seitenansicht durch zwei Ausführungsbeispiele eines erfindungsgemäß verwendbaren Abrichtwerkzeuges, die Fig. 3 zeigt einen Querschnitt durch ein erfindungsgemäßes Abrichtwerkzeug und die Fig. 4 zeigt einen Querschnitt durch das eingespannte Abrichtwerkzeug.

Das erfindungsgemäß eingesetzte Abrichtwerkzeug ist eine Kreissäge und besteht aus einem Stahlring 1, der den Trägerkörper bildet und mehreren, an seinem Umfang angeordneten Segmenten 2, die den Abriebring bilden. Die Segmente 2 weisen beispielsweise eine Metallbindung auf und Diamantkorn mit einer Größe von zwischen 40 und 140 mesh als schneidendes Korn. Die Konzentration des Diamantkorns im gegebenen Ausführungsbeispiel ist 100 (d. h. 4,4 ct/cm³) bei einer Korngröße von 60/80 mesh (Mischungsverhältnis 1:1). Maximal ist eine Kornkonzentration von 150 vorgesehen.

Vorteilhaft weisen die Segmente 2 mehrere Schichten ("Sandwichausführung") auf.

Beispielsweise hat der Stahlring 1 eine Dicke E von 1,2 mm während die Dicke T der Segmente 1,5 mm beträgt. Die Dicke E des Stahlringes 1 beträgt maximal das 0,9fache der Breite T des Abriebringes.

Wie aus der Fig. 1 ersichtlich, ist der Stahlring 1 zwischen den Segmenten 2 mit Schlitzen 3, welche zur Vermeidung von Rissen am Ende zylinderförmig erweitert sind, versehen. Die Länge LS der Schlitze 3 ist etwa doppelt so groß wie die Segmenthöhe X. Die Schlitze 3 haben eine Breite von 0,1 mm bis 2,0 mm.

Um eine zusätzliche Dämpfung zu bewirken, ist der Stahlring 1 noch mit Schlitzen 4 versehen, die im Ausführungsbeispiel S-förmig verlaufen.

Die Segmente 2 sind mit dem Stahlring 1 laserverschweißt. Der Stahlring 1 weist eine innere Vorspannung auf.

Bindungsmatrix ist eine hartstoffverfüllte Co-Bronze (laserverschweißbar).

Das Abrichtwerkzeug ist für alle Korn- und Bindungsarten, d. h. Korund, Siliciumkarbid, CBN und Diamant in Kunstharz-, Keramik- und Metallbindung vorteilhaft einsetzbar. Als Abrichtverfahren kommen sowohl Gleich- als auch Gegenlaufabrichten in Frage. Wegen der Vorteile kann bei der jeweiligen Arbeitsgeschwindigkeit der Schleifscheibe (auch beim Hochgeschwindigkeitsschleifen) abgerichtet werden, wobei das Geschwindigkeitsverhältnis in weiten Grenzen an das Schleifproblem angepaßt werden kann.

Da dieses Abrichtwerkzeug vorteilhaft und kostengünstig mit großem Durchmesser D und geringem Gewicht gefertigt und eingesetzt werden kann, kann das Abrichtaggregat auch bei hohen Umfangsgeschwindigkeiten für relativ geringe Drehzahlen ausgelegt werden. Dies bringt schwingungsmäßige und kostenmäßige Vorteile mit sich. Das bei den heutigen Abrichtwerkzeugen notwendige Absenken der Scheibengeschwindigkeit (z. B. 80 m/s Umfangsgeschwindigkeit beim Schleifen, 25 m/s Umfangsgeschwindigkeit beim Abrichten) während des Abrichtprozesses kann damit vermieden werden. Dieses Abrichten mit konstanten, hohen Schnittgeschwindigkeiten erlaubt kurze Abrichtzeiten und senkt damit die Abrichtkosten.

Für den Trägerkörper 1 sind auch Verbundkonstruktionen, z. B. Innenteil aus einem faserstoffarmierten Kunstharz mit einem laserverschweißbaren, metallischen Außenteil, möglich.

Nach der Fig. 2 ist der Abstand a zwischen den Segmenten 2 wesentlich größer als die Schlitzbreite SB.

Der Stahlring 1 kann sehr schmal sein. Um auch beim axialen Vorschub eine hohe Stabilität zu gewährleisten, kann die Säge bzw. das Abrichtwerkzeug zwischen zwei breiten Flanschen 5 eingespannt werden, die bis knapp an die Segmente 2 heranreichen.

## Patentansprüche

1. Verwendung einer Säge mit einem kreisförmigen metallischen Sägeblatt, an dessen Umfang mit Schleifkorn, vorzugsweise Diamantkorn, besetzte Schneidsegmente angeordnet sind, zum Abrichten von Schleifscheiben.

2. Verfahren zum Abrichten von Schleifscheiben, wobei ein sich um eine zur Drehachse der Schleifscheibe parallele Achse drehender Abrichtkörper mit radialem und axialem Vorschub bewegt wird, dadurch gekennzeichnet, daß als Abrichtkörper eine Säge mit einem kreisförmigen metallischen Sägeblatt, an dessen Umfang mit Schleifkorn, vorzugsweise Diamantkorn besetzte Schneidsegmente angeordnet sind, eingesetzt wird.

## Claims

1. Use of a saw having a circular metal saw blade, at the periphery of which are arranged cutting segments fitted with abrasive grain, preferably diamond grain, for dressing grinding wheels.

2. A method of dressing grinding wheels wherein a dressing body which rotates about an axis which is parallel to the axis of rotation of the grinding wheel is moved with radial and axial feed characterised in that the dressing body used is a saw having a circular metal saw blade, at the periphery of which are arranged cutting segments fitted with abrasive grain, preferably diamond grain.

## Revendications

1. Utilisation d'une scie comportant une lame de scie métallique de forme circulaire, sur le pourtour de laquelle sont disposés des segments de coupe, pourvus de grains de meulage, de préférence de grains de diamant, pour un ajustage de meules.

2. Procédé d'ajustage de meules, où un corps d'ajustage, tournant autour d'un axe parallèle à l'axe de rotation de la meule, est déplacé avec avance radiale et axiale, procédé caractérisé en ce que comme corps d'ajustage, on utilise une scie comportant une lame de scie métallique de forme circulaire, sur le pourtour de laquelle sont disposés des segments de coupe pourvus de grains de meulage, de préférence de grains de diamant.
